# EUROPEAN PATENT SPECIFICATION

(11) **EP 0 605 665 B1**
(45) Date of publication and mention of the grant of the patent: **16.08.2000**
(21) Application number: 93906361.6
(22) Date of filing: 30.09.1992
(51) Int. Cl.: B65B 11/02, A01F 15/07

(54) **A METHOD AND AN APPARATUS FOR PRODUCING A SHEET WRAPPED STRING OF PRESSED BALES OF VEGETABLE MATERIAL**
VERFAHREN UND VORRICHTUNG ZUM HERSTELLEN EINER REIHE VON GEPRESSTEN PFLANZENBALLEN IN EINER UMHÜLLUNGSFOLIE
PROCEDE ET APPAREIL DE PRODUCTION D'UNE SERIE DE BALLES PRESSEES DE MATIERE VEGETALE, ENVELOPPEE DANS UNE FEUILLE

(30) Priority: 30.09.1991 DK 166891
(43) Date of publication of application: 13.07.1994
(73) Proprietor: KORSGAARD, Ebbe, DK-7960 Karby (DK)
(72) Inventor: KORSGAARD, Ebbe, DK-7960 Karby (DK)
(74) Representative: Skoett-Jensen, Knud
(86) International application number: DK9200288
(87) International publication number: WO9307059

(56) References cited:
- EP-A- 0 152 960
- EP-A- 0 274 026
- EP-A- 0 524 779
- WO-A-91/07867
- AU-B- 590 141
- DE-A- 4 201 856
- US-A- 5 012 631

## Description

The present invention relates to a method and an apparatus for wrapping a successively built up string of closely juxtaposed objects such as pressed straw bales with one or more sheet webs, and of the type specified in the introductory clause of claims 1 and 3, respectively. Apparatuses of this kind are known in different designs, see e.g. US-A-4,793,124, US-A-5,012,631, WO 93/07059 and EP-A-0,524,779, and it is characteristic that the object string is built up by a successive supply of the objects to an area just in front of the wrapping station, the objects then being moved in joined relationship through this station. When the objects are pressed bales it is thus possible to build up a wrapped string of bales which can be successively deposited on the ground as the apparatus is moved forwardly.

It is also characteristic that the wrapping station comprises a large ring body standing upright across of the string and being rotatable for bringing the web reel or reels around in the circular path for a continuous screw wrapping of the string as the latter is moved, relatively. An associated problem is to arrange for the bale string to be supported in the wrapping station in such a manner that the web can be wrapped all the way around the string, i.e. also across the underside thereof. It has been possible, however, to solve this problem without the aid of the ring member, e.g. by effecting a free carrying of the relevant bales by an axial forcing together of the bales, or by making the bales be carried on rearwardly projecting carrier spears, whereby the web will of course be wrapped underneath these spears, but on the other hand be retractable therefrom by the relative rearward movement of the string.

By the wrapping of the pressed bales it is important to achieve a tight wrapping, partly for using no more web than necessary, but also for securing a good sealing between the overlapping web screw windings. By the wrapping of round bales this is reasonably easy to ensure, since all what is required will be suitable means for keeping the web tight between the bale string and the unreeling area at the respective web reels. The problem is far more pronounced by the wrapping of rectangular bales or for that sake of piled round bales, e.g. two round bales side by side with a third bale resting on the top of that pair of bales, thus forming a generally triangular formation. It is easy enough to get the web placed along the straight stretches of the cross section, but with the evenly rotating ring body it is difficult to also secure a good stretching of the web. It should be endeavoured not only to maintain a good tight-keeping of the web, but also a direct stretching thereof, for better web economy and for improved sealing in the overlapping areas.

The problem in question can be illustrated as follows:

The web, after being laid over a corner of a polygonal structure, may well be stretched by the further circular movement of the web reel, as the latter will initially move away from the corner; however, it will soon be moving outside and along the following linear side of the wrapping area, then changing into an initial laying-in of the web towards this side. Towards the end of this phase, i.e. just when the moved web reel is about to effect the final laying-in of the web against this side at the distal corner thereof, the reel, however, is moved along a ring path which is almost perpendicular to the plane of the side, such that there will be no substantial increase in the distance between the web reel and the previously covered corner, whereby it is not possible to provoke any effective stretching of the web.

It has been attempted to work with differentiated moving velocities of the web reel in order to overcome the problem, but in connection with the present invention it has been realized that a much simpler solution is to arrange the round-going movement of the web reel in such a manner that it does not take place in a circular path, but at least partially along straightlined stretches approximately in parallel with straight contour lines of the cross section of the object string.

Hereby, the geometrical conditions will change to the effect that an effective web stretching may take place during the entire passage of the web reel along the relevant side, while the subsequent laying-in of the web length against the side will occur by an abrupt change of direction of the movement of the web reel, whereby the precedingly produced stretching of the web will be maintained by this laying-in. Immediately thereafter, a following wrapping stretch may established in a corresponding manner, with an effectively stretched web length, and so forth.

On this background, the invention is characterized by the steps and features recited in the characterizing clause of claim 1 and 3, respectively.

An apparatus according to the invention may be constructed in a relatively simple manner, as it is possible to avoid the large ring member and instead make use of belts or chains driven in straight partial runs between suitably positioned diverter rollers or pinions.

Moreover, these diverter rollers or pinions may be adjustably fixable, whereby the apparatus is easily adjustable to different configurations of the cross section of the object string. This is particularly important when an apparatus is owned by a machine pool serving customers working with different bale shapes and sizes.

In the following the invention is described in more detail with reference to the drawing, in which:-
Fig. 1 is a schematic perspective view of an apparatus illustrating the background of the invention.
Fig. 2 is a longitudinal sectional view thereof,
Fig. 3 is a cross sectional view along the line III-III of Fig. 2,
Fig. 4 is a perspective view of the wrapping means, according to the invention.
Fig. 5 is a front view thereof, and
Fig. 6 a corresponding view of the same means in another configuration thereof.

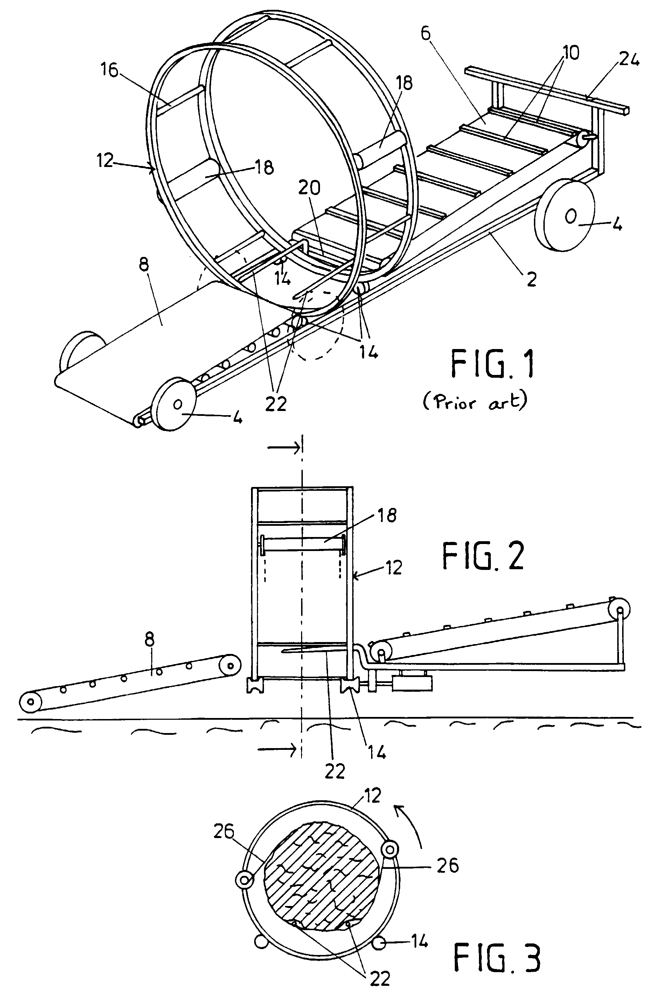

The apparatus shown in Figs. 1-3 is known, in principle, so it should be described briefly only. It has a driving chassis 2 with wheels 4, of which one or more can be driven by a motor for advancing the apparatus along the field with a suitable velocity, towards the right in Figs. 1 and 2. The chassis 2 carries a feeding conveyor 6 and an outlet conveyor 8, capable, respectively, of receiving and delivering straw bales, which may be supplied by means of a tractor front loader. The feeding conveyor 6 has entrainment members 10 operable to push the received bales forwardly to a middle area, in which there is provided a large ring body 12, resting on driving rollers 14 and made of two rings mutually connected by cross rods 16, and carrying between them two diametrically opposed supply reels 18 holding suitable plastic webs.

On a traverse 20 at the delivery end of the feeding conveyor 6 there is mounted a pair of forwardly projecting and freely ending carrier spears 22, which project into the lower region of the ring body 12, such that these spears may carry the bales during their passage through the ring body. During this passage, the rollers 14 will serve to rotate the ring body 12, such that from the web reels 18 there will be untolled web lengths 26 (Fig. 3) to be wrapped in a screw configuration about the string of juxtaposed bales as formed by the successive supply of the bales, whereafter the wrapped bale string, resting on the delivery conveyor 8, will be moved so as to be deposited on the ground behind the forwardly moving apparatus. The web will be wrapped down under the spears 22, but will also be successively retracted therefrom over the free spear ends by the relative thought-motion of the bales, such that the bale string can be delivered fully and tightly wrapped in the web portions 26.

Optionally, the spears 22 can be replaced by a thin carrier plate likewise ending freely in the rearward direction.

The actual wrapping by the web 26 functions very well with large round bales as illustrated in Fig. 3. In connection with the supply reels 18 there may be provided braking means ensuring that the web stretches 26 be wrapped about the string with a noticeable tightness about the string.

However, should the cross sectional shape of the bale string be polygonal, the picture will be very different, inasfar as, as previously explained. It will be almost impossible to produce a tight or stretched wrapping about the advanced bale string with the use of a just reasonably constantly rotating ring body 12.

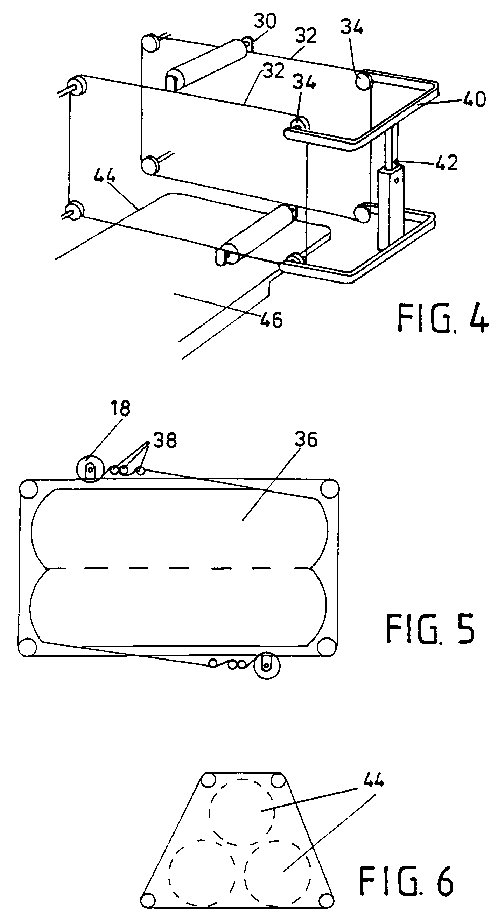

On this background, Figs. 4-6 show the alternative according to the invention to the use of the circular wrapper ring 12. According to fig. 4 this ring is replaced by a controlled cord or chain guidance of the web reels 18, in that the ends of these reels are held by brackets 30 outstanding from respective cords, belts or chains 32 running over sprocket wheels 34 in such a manner that the reels 18, when one or more of the pairs of wheels 34 are driven, will be moved around along a four-sided path, which, see Fig. 5, is adapted so as to surround a box shaped bale or article 36, optionally, as shown, two such articles piled on each other.

Hereby the reeled off web will be uniformly stretched all the time, because the web reel or reels 18 will be moved substantially in parallel with the single bale or article sides.

In fig. 5 it is indicated that on the delivery side of the web reel or reels 18 there may be provided guiding rollers 38, which serve to retain the delivered web for building up a tensile stress therein and also to produce transverse stretching of the paid out web.

The pulleys 34 may be arranged in the apparatus in such a manner that they are easy to rearrange between different positions, whereby their location can easily be adapted to the actual size and shape of the handled articles. Thus, it is shown in Fig. 4 that the pulleys 34 may be carried by fork portions 40, which are height adjustable by means of a connected telescopic system 42. Correspondingly, the inwardly protruding length of the fork portions may be adjustable, such that the apparatus, as shown in Fig. 6, may surround more irregular article shapes, shown as round bales piled into a triangular shape, cf. DK-C-159,987.

It would be possible to use a resilient or otherwise length variable cord 32, such that it will not necessarily be required to change out the cords if it becomes actual to shift to another configuration of the bales or the articles.

Just because it is highly desirable to operate with a well tightened wrapping web it is correspondingly important that the means for supporting the bales in the wrapping area should not be of any large thickness, confer the spears 22 in Fig. 1. Similar spears may be used in connection with Fig. 4, where, however, there is used a thin carrier plate 44 projecting from a thicker support 46, which may be a chute or a conveyor.

The disclosed embodiment are particularly well suited for the handling of vegetable bales, but it will be appreciated that the systems may also handle other articles, which will be particularly relevant for the system according to Figs. 4-6.

## Claims

1. A method of producing a sheet wrapped string of pressed bales of vegetable material, whereby the bales are successively passed through a wrapping area, in which means (12, 32) for carrying one or more supply reels (18) of a sheet web (26) are moved about each added bale for wrapping the latter in continuation of the preceding wrapping of the preceding added bale, the newly added bale being held axially against the preceding bale and the wrapping means (12) being moved for progressively wrapping the bale, and the bale during its passage through the wrapping area being carried in such a manner that the web reel or reels are freely movable in the cross direction of the string underneath the underside of the bale, the bales hereby being held carried on a lower, freely rearwardly projecting and smooth support such as a pair of carrier spears (22), the web (26) by the wrapping being wrapped underneath this support and subsequently is brought to leave the support together with the bale by an unobstructed movement over the free end of the support (22), characterized in that the wrapping is effected by means of a belt or a pair of chains (32) carrying the web supply reels (18) and extending in linear stretches between preferably position adjustable diversion rollers or pulleys (34).

2. An apparatus for carrying out the method according to claim 1, comprising means (12, 32) for wrapping one or more sheet webs (26) about successively supplied bales and means (6) for moving the bales through the associated wrapping area, means being provided for carrying the bales in the wrapping area in a position free-to-be-wrapped, said carrying means being constituted by lower, rigid and smooth, supporting means such as a carrier plate or a pair of carrier spears (22), which, from an infeed area at the foremost end of the wrapping area projects in a free-carried manner rearwardly towards, optionally to or past, the rear end of the wrapping area, these supporting means being designed with a small thickness in the height direction and located above the lower part of the path of movement of the wrapping means (12, 32), characterized in that the wrapping means comprise a belt or a pair of cords or chains (32) carrying one or more sheet web supply means (18) and extending in straight runs between preferably position adjustable diverter rollers or pulleys (34).

3. An apparatus according to claim 2, in which the diverter members are position adjustable.

4. An apparatus according to claim 3, in which the flexible belt, chain or chord means are arranged so as to be resiliently or otherwise length adjustable for accomodation required different total lengths of the reel carrying means.

5. An apparatus according to claim 2, in which there is provided, in connection with the said conveyor, a weighing system for weighing the received bales, preferably for determination of the dosing of a treating agent for injection into the bales by associated means for effecting such an injection.

## Patentansprüche

1. Ein Verfahren zur Herstellung eines bogenumwickelten Stranges eines gepreßten Gemüsematerialballens, wobei die Ballen nacheinander durch einen Einwickelbereich geführt werden, indem Mittel (12, 32) zum Tragen eines oder mehrerer Zuführrollen (18) einer Bogenbahn (26) über jeden zugeführten Ballen zum Einwickeln des letztgenannten in Fortführung des vorhergehenden Einwickelns des vorher zugeführten Ballens bewegt werden, wobei der neuerlich hinzugeführte Ballen axial gegen den vorherigen Ballen gehalten wird und das Einwickelmittel (12) zum fortschreitenden Einwikkeln des Ballens bewegt wird, und der Ballen während seines Durchganges durch den Einwickelbereich in einer solchen Weise getragen wird, daß die Bogenrolle oder -rollen in der Querrichtung des Stranges unterhalb der Unterseite des Ballens frei bewegbar sind, wodurch die Ballen auf einem unteren frei nach hinten gerichteten und glatten Träger tragend gehalten werden, wie zum Beispiel einem Paar Trägerspeere (22), wobei die Bahn (26) dadurch daß die Einwicklung unterhalb dieses Trägers und im folgenden eingewickelt wird, dazu gebracht wird, den Träger zusammen mit dem Ballen durch eine ungehinderte Bewegung über das freie Ende des Trägers (22) zu verlassen, **dadurch gekennzeichnet**, daß das Einwickeln mittels eines Gurtes oder eines Kettenpaares (32) bewirkt wird, das die Babnzuführrollen (18) trägt und sich in linearer Ausdehnung zwischen vorzugsweise positionseinstellbaren Umlenkrollen oder -scheiben (34) erstreckt.

2. Eine Vorrichtung zum Ausführen des Verfahrens gemäß Anspruch 1, umfassend Mittel (12, 32) zum Wickeln einer oder mehrerer Bogenbahnen (26) um aufeinanderfolgend zugeführte Ballen und Mittel (6) zum Bewegen der Ballen durch den sich anschließenden Einwickelbereich, Mittel, die zum Tragen der Ballen in den Einwickelbereich in einer Position, in der sie frei sind, um eingewickelt zu werden, vorgesehen sind, wobei die Tragemittel durch untere, steife und glatte Trägermittel, wie zum Beispiel eine Trägerplatte oder ein Paar Trägerspeere (22) gebildet sind, die sich von einem Einführungsbereich am vordersten Ende des Einwickelbereiches in einer freitragenden Weise nach hinten gerichtet in Richtung entweder zu oder hinter das hintere Ende des Einwickelbereiches erstrecken, wobei diese Trägermittel mit einer geringen Stärke in Richtung der Höhe gebildet sind und oberhalb des unteren Teils des Bewegungsweges des Einwickelmittels (12, 32) angeordnet sind, **dadurch gekennzeichnet**, daß die Einwickelmittel einen Gurt oder ein Paar Schnüre oder Ketten (32) umfassen, die einen oder mehrere Bogenbahnzuführmittel (18) tragen und sich in geraden Verläufen zwischen vorzugsweise positionseinstellbaren Umlenkrollen oder -scheiben (34) erstrecken.

3. Eine Vorrichtung gemäß Anspruch 2, in der die Umlenkelemente positionseinstellbar sind.

4. Eine Vorrichtung gemäß Anspruch 3, in der die flexiblen Gurt-, Ketten- oder Schnürmittel so angeordnet sind, daß sie zur Unterbringung der verschiedenen Gesamtlängen der Rollenträgermittel elastisch oder anderweitig längeneinstellbar sind.

5. Eine Vorrichtung gemäß Anspruch 2, in der in Verbindung mit dem Förderer ein Wiegesystem zum Wiegen der aufgenommenen Ballen vorgesehen ist,, vorzugsweise zum Bestimmen der Dosierung eines Behandlungsmittels zur Injektion in die Ballen durch beigeordnete Mittel zum Bewirken solch einer Injektion.

## Revendications

1. Procédé pour produire une série, enveloppée de feuille, de balles pressées de matière végétale, par quoi les balles traversent successivement une zone d'enveloppement, dans lequel des moyens (12, 32) pour porter une ou plusieurs bobines d'alimentation (18) d'une bande de feuille (6) sont déplacés autour de chaque balle ajoutée pour envelopper cette dernière en continuation de l'enveloppement précédent de la balle ajoutée précédente, la balle nouvellement ajoutée étant maintenue axialement contre la balle précédente et les moyens d'enveloppement (12) étant déplacés pour envelopper progressivement la balle, et la balle durant son passage dans la zone d'enveloppement étant portée de telle manière que la ou les bobines de bande soient librement déplaçables dans la direction transversale de la série sous le dessous de la balle, les balles étant de ce fait maintenues sur un support lisse et faisant saillie librement vers l'arrière, inférieur, tel qu'une paire de tiges de support (22), la bande (26) par l'enveloppement étant enveloppée sous ce support et par la suite amenée à quitter le support, ainsi que la balle, par un mouvement libre au-dessus de l'extrémité libre du support (22),
caractérisé en ce que l'enveloppement est réalisé par l'intermédiaire d'une courroie ou d'une paire de chaînes (32) portant les bobines d'alimentation (18) de bande et s'étendant en sections linéaires entre des rouleaux ou des poulies de dérivation (34), de préférence, réglables en position.

2. Appareil pour mettre en oeuvre le procédé selon la revendication 1, comprenant des moyens (12, 32) pour envelopper une ou plusieurs bandes de feuille (26) autour de balles successivement fournies, et des moyens (6) pour déplacer les balles à travers la zone d'enveloppement associée, des moyens étant prévus pour porter les balles dans la zone d'enveloppement dans une position libre pour être enveloppée, lesdits moyens porteurs étant constitués par des moyens de support inférieurs, rigides et lisses, tels qu'une plaque de support ou une paire de tiges de support (22), qui, à partir d'une zone d'entrée à l'extrémité la plus avant de la zone d'enveloppement, font saillie d'une manière libre vers l'arrière vers, éventuellement proche ou au loin, l'extrémité arrière de la zone d'enveloppement, ces moyens de support étant conçus avec une faible épaisseur dans la direction de la hauteur et situés au-dessus de la partie inférieure de la trajectoire des moyens d'enveloppement (12, 32), caractérisé en ce que les moyens d'enveloppement comprennent une courroie ou une paire de câbles ou de chaînes (32) portant un ou plusieurs moyens d'alimentation (18) en bande de feuille et s'étendant en sections droites entre des rouleaux ou des poulies (34) de dérivation, de préférence, réglables en position.

3. Appareil selon la revendication 2, dans lequel les éléments de dérivation sont réglables en position.

4. Appareil selon la revendication 3, dans lequel les moyens à câbles, chaînes, courroies souples sont agencés de façon à être élastiquement ou autrement réglables en longueur, pour recevoir les différentes longueurs totales requises des moyens de support des bobines.

5. Appareil selon la revendication 2, dans lequel il est prévu, en liaison avec ledit convoyeur, un système de pesage pour peser les balles reçues, de préférence, pour déterminer le dosage d'un agent de traitement pour l'injection dans les balles par des moyens associés pour effectuer une telle injection.
